# EUROPEAN PATENT APPLICATION

(11) **EP 3 097 887 A1**
(43) Date of publication of application: **30.11.2016**
(21) Application number: 16075014.7
(22) Date of filing: 19.05.2016
(51) Int. Cl.: A61C 13/10, A61C 13/36

(54) **ARTIFICIAL PRE-MOUNTED TEETH IN A FIXED AND REPEATABLE POSITION FOR MAKING A DENTAL PROSTHESIS AND METHOD FOR MANUFACTURING SUCH PROSTHESES**

(30) Priority: 25.05.2015 IT UB20151165
(71) Applicant: Zucchini, Nicola, 44047 S.Agostino (Ferrara) (IT)
(72) Inventor: Zucchini, Nicola, 44047 S.Agostino (Ferrara) (IT)

(57) **Abstract**

The invention relates to an assembled that forms a full upper or lower dental arch, ready to be used in the construction of dentures. The invention is composed by an arc-shaped structure of support (15) on its surface,it is possible to mount a plurality of artificial teeth (1-14). Each tooth (1-14) has at the base ,meant as such, the opposite surface to the chewing surface, a preparation defining a protrusion or a cavity ready to be coupled to a cavity or a complementary protrusion of the support structure (15) according to a system of male-female interlocking; this process identifies the tooth (1-14) in a specific fixed and unique position, in the structure (15) in relation with the other teeth (1-14); protrusions and cavities are all conformed to the cross.

## Description

The present invention has for object fourteen teeth, a relative support structure to make a dental prosthesis and a method for manufacturing such prostheses. Traditionally, the technician positions the artificial teeth one by one in the patient's mouth model with an articulator (which it is a dental technician instrument) and subsequently fix the position of the teeth with a resin which incorporates them to form the dental prosthesis.

The technique mentioned above is described in the book " Moderno trattato di protesi mobile completa" Martin G., A. Canton, A. Marino, Martina editions. The realization of a dental prosthesis according to the technique described above is particularly delicate and very long, since the artificial teeth are sold separatly, they must be positioned one by one by a dental technician and must be arranged with a ratio of perfect to obtain an ideal occlusion.

A different technique for the fabrication of a dental prosthesis is provided by the patent US1696422. According to this technique a support arch is used for the artificial teeth that have to be incorporated in the resin ,to form the prosthesis. The described arc is however difficult to use, because it does not allow its rapid coupling to the artificial teeth, and because it does not allow a firm positioning of the teeth.

A further technique for the fabrication of a dental prosthesis is provided by the patent application WO9826728. Also according to this technique, there is a support used for the artificial teeth used to incorporate there in the resin to form the prosthesis. The arch described allows a more precise positioning of the artificial teeth compared with the one described in the US1696422 patent, given that, for each tooth, has a shaped protrusion intended to be coupled with a corresponding cavity of the tooth. However, this arch is difficult to use, both for the complexity of its shape, and because the type of coupling is different for each tooth. In addition, the arch is rather cumbersome, therefore the teeth must be thin around their cavity. This makes the teeth relatively brittle. Moreover, this system does not guarantee the same position of the teeth (in spatial relationships with the others) because there is an arm that must be adjusted by the user, securing it with a screw; this determines a borderless number of positions, where the teeth can't be used exactly as the manufacturer has designed them. Furthermore, in this solution the central arm (the one with the screw) can't be held in the patient's mouth ,so it must be removed before performing the prosthesis, automatically it no longer guarantees the maintenance of a fixed and repeatable position. Another disadvantage of this solution is the fact that the form of the coupling between the teeth and the arch, poses extremely stringent constraints in the construction of artificial teeth by means of an industrial process of three-color molding (used to the artificial teeth builders).

A further technique WO2015125573 only expects to dig an artificial tooth to stay in a fixed and repeatable position on a generic prosthetic structure. This technique, however, does not provide an arc which positions the other teeth in a very precise position, compared to the first tooth, forming a single arch as has been thought by the manufacturer. Although this system does not allow to build an entire dental arch with a unique position of all teeth (in spatial relationships with the other teeth).

The purpose of the present invention is to make available a single structure 16, composed of fourteen artificial teeth and an associated support structure used to make a dental prosthesis and a method for manufacturing such prostheses which overcome the drawbacks of the known techniques mentioned above.

In particular, it is an aim of the present invention to make available fourteen artificial teeth, a relative support structure used to make a dental prosthesis and a method for manufacturing such a dental prosthesis able to make faster the realization of the prosthesis to the dental technician.

A further object of the present invention is to propose fourteen artificial teeth, a relative support structure used to make a dental prosthesis and a method for manufacturing this prosthesis able to make the realization of the prosthesis by the dental technician more precise and repeatable.

Another objective of the present invention is to propose fourteen artificial teeth, a relative support structure used to make a dental prosthesis and a method to construct such prosthesis with a automated realization process.

Said aims are fully achieved by the fourteen artificial teeth, from the relative support structure used to make a dental prosthesis and the method to make such prostheses which are the objectives of the present invention, which is characterized by the contents of the claims indicated below.

Further characteristics and advantages of the invention will become apparent from the following description, illustrated purely by way of example and not limitation in the accompanying drawing tables, in which:
- Fig. 1 shows an arch support structure and a plurality of artificial teeth made in accordance with the present invention;
- Fig. 2 shows, enlarged, a detail of Fig. 1;
- Fig. 3 illustrates the support structure and the artificial teeth of Fig. 1, assembled together; and
- Fig. 4 shows the support structure and the artificial teeth of Fig. 1, partially assembled between them.

With reference to the attached figures, with the numbers 1 to 14 are indicated fourteen artificial teeth used to make a upper or lower dental prosthesis. It should be noted that the number of artificial teeth can, of course, be different from fourteen, depending on the patient's needs.

The teeth 1-14 are pre-formed in resin or ceramic or composite.

The teeth 1-14 are neatly laid on a support structure 15 and form a semi-finished industrial 16 as to provide the dental technician for a fast and precise realization of dental prostheses.

The support structure 15, complementary to the teeth 1-14, presents an arc shape which reproduces the shape of a maxillary or mandibular arch. For this reason, the semi-finished product 16 is hereinafter referred as: "pre-assembled arch" 16, or even "artificial pre-mounted teeth in a fixed and repeatable position" 16 .

Clearly, the arch preassembled 16 destined to the realization of the upper dental prosthesis differs from that used for the construction of the lower dental prosthesis, the two pre-assembled arches comprising, each, with their own set of teeth 1-14 and a respective support structure 15, suitably shaped.

Of course, the pre-assembled upper arch 16 fits perfectly with the pre-assembled upper arch 16 complementary, in a unique, fixed and repeatable position.

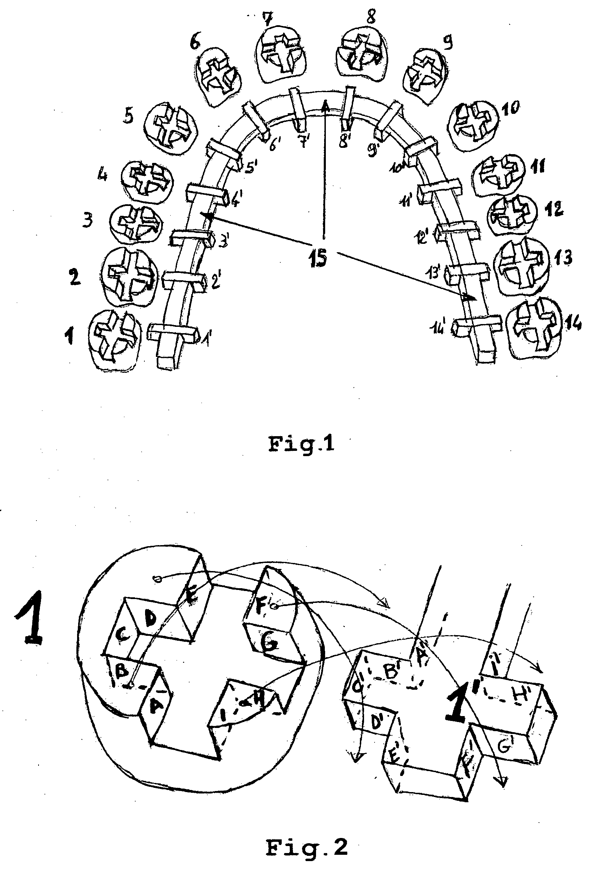

The teeth 1-14 have, at their base, a depression in a cross shape that creates the vertical walls A, B, C, D, E, F, G, H, I (Fig. 2) that allow the teeth 1- 14 themselves to be inserted into the structure 15 in a unique position in the three spatial axes. The structure 15 is a bar that has a arch portion and fourteen segments 1'-14 'perpendicular to it (Fig.1) forming fourteen "crosses"; each "cross" shape of the vertical walls A ', B', C ', D', E ', F', G ', H', I '(Fig. 2) that allow the teeth 1-14 to be inserted in the structure 15 in the form of arch in a unique, fixed and repeatable position, in the three spatial axes.

More generally, the structure 15 has a extrusive processing, meant as a processing which causes a protrusion or a intrusion (always shaped as a "cross", according to a variant not shown), meant as a processing which causes a concavity or a convexity, which form a system of male-female interlocking.

Consequently, each of the teeth 1-14, presents on the base (meant as such, the opposite surface to the chewing surface of the teeth) a processing intrusive, or extrusive (always shaped as a "cross", according to a variant not shown), which form a system of male-female interlocking, complementary to that of the structure 15.

In other words, the support structure 15 comprises an arc-shaped bar that reproduces the form of a maxillary or a mandibular arch, and has a protrusion (or a cavity) machining adapted to be coupled to a complementary cavity (or a complementary protrusion) of the tooth, as a system of male-female interlocking. Such manufacture, according to which protrusions and recesses are shaped complementarily to a cross, that coding, and identifies each tooth in a specific, fixed and unique position in the support structure.

It should be noted that the intrusive or extrusive machining of the tooth 1-14, which identifies and encodes it in a specific position in the structure 15 in the shape of arch, allows to correctly position the tooth without reversing it with the other.

This assembled device (the arch preassembled 16) allows the positioning of the fourteen 1-14 artificial teeth in a less craft and more similar to a semifinished product.

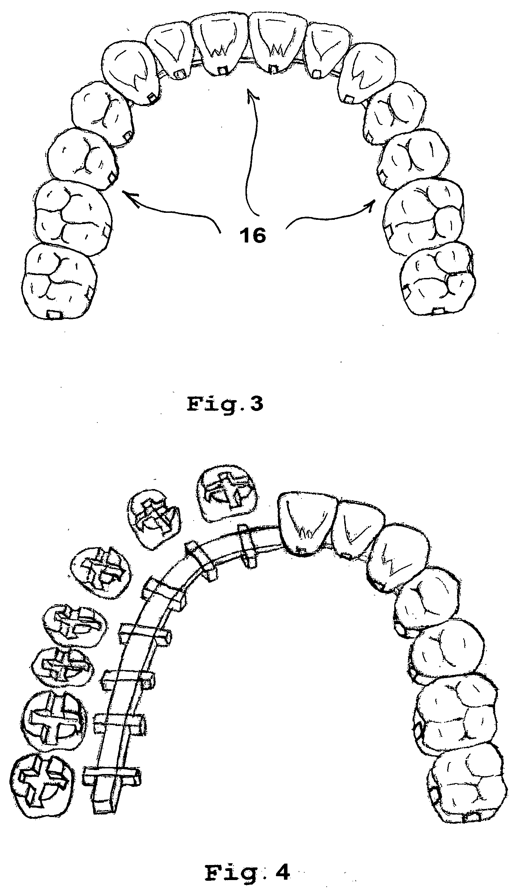

This feature allows to industrially build almost 60% of a prosthesis, whereas before, without this device 16, it had to be built for the 90% in the traditional way. The finished device 16 appears as in Fig. 3.

It will be described below how to assemble the device 16, consisted of the fourteen teeth 1-14 and by the support structure 15.

As seen in Fig. 1 there are fourteen teeth 1-14 that present in the lower part many vertical walls A, B, C, D, E, F, G, H, I, visible in Fig. 2.

As seen in Fig. 1 there is a structure 15 which has fourteen segments perpendicular to it 1'-14 ', which form the vertical walls A', B ', C', D ', E', F ', G', H ', I' visible in Fig 2 where the teeth 1-14 will be accommodated.

Each tooth 1-14 has its complementary position in the structure 15, for example tooth 1 is staying in the position 1 ', tooth 2 is staying in position 2', and so on.

As it can be seen from the detail of Fig. 2, each tooth 1-14, when the wall A corresponds perfectly to the wall A 'and so also all other walls B and B', C and C ', etc., it is positioned obligatorily, if properly positioned, in a unique and repeatable position.

If I repeat correctly all bays, I create the device 16 (Fig. 3).

According to a peculiarity of the present invention, with 3D scanning systems, optical or X-ray, which scans the oral anatomy of each person, or with traditional impression, it can be produced, with suitable dental materials, support structures 15 of some or all the fourteen teeth 1-14 custom-made for each individual, with the intrusive or extrusive processing complementary to said teeth 1-14, which once assembled allows the realization of a single, rigid prosthesis.

In other words, with 3D design software systems and a custom project led by impressions of the oral cavity of people, we can produce, with suitable dental materials, support structures 15 of some or all fourteen teeth 1-14 for artificial custom each individual, with machining of intrusive or extrusive complementary to said teeth 1-14, which once assembled allows the realization of a single rigid prosthesis and also different from classical dentures.

In practice, in the context of a process automation, it is possible to perform the following steps for any custom prostheses of the patients:
- take the impression of the patient's oral cavity;
- produce or choose the artificial teeth on the basis of this impression;
- produce or choose the support structure on the basis of this impression;
- produce a cast of the patient's gingiva on the basis of this impression;
- assemble the teeth, the support structure and the cast of the gingiva to form the main part of the prosthesis; and
- fill with the resin the few missing parts to obtain the dental prosthesis over.

The automatic production process of dental prosthesis described above is made particularly easy by the simple structure and the same shape of all the male-female interloking system of the support structure and of the artificial teeth.

More simply, according to a manual process, it is the following steps to form a preassembled arch 16 for the patient:
- take the impression of the patient's oral cavity;
- choose the artificial teeth on the basis of this impression;
- choose the support structure on the basis of this impression;
- assemble the teeth on the support structure to form the pre-assembled arch.

Advantageously, according to the invention, the artificial teeth will not be sold separately anymore but will be sold arches preassembled, ready to be incorporated into the pink resin that the dental technicians will use to make dentures.

The technician can then mount the arch's teeth all at once saving a lot of time; and if he chooses the complementary antagonist arch, it can also mount the teeth of the opposite bite, all at once saving too much time.

In addition if the registration of the mouth closing position of the patient is different from the one recorded by the dentist, the dental technician will not have to move fourteen times the fourteen teeth to correct it, but being united it is sufficient to move them all at once, saving a lot of time.

In many cases this feature is a huge benefit, and it can be used, but if in other cases it would not be welcome, here is that this device can be separated and its teeth can also be used in the traditional way.

Thanks to the simplicity and effectiveness of the cruciform shape of the above described, it's possible to maximize the benefits listed above.

Moreover, according to a feature of the present invention, it is possible, in the context of a process automation, to produce both the teeth 1-14 and the support structure 15 and the cast of the gum on the basis of the scanning of the oral anatomy of the patient, and assemble all to obtain the final and custom prosthesis for the patient.

## Claims

1. A support structure of a plurality of artificial teeth, comprising a bar (**15**) shaped as an arc which reproduces the shape of a maxillary or mandibular arch,
**characterized in that** it comprises a plurality of segments (**1'-14 '**) fixed to the bar transversely to it, with each segment defining a cross bar, for a stable and rigid connection to a corresponding artificial tooth of said plurality of artificial teeth.

2. Support structure according to **claim 1,** in which the bar is disposed in a reference plane and each segment is placed in said reference plane.

3. Support structure according to **any one of the preceding claims,** in which each individual cross defines vertical walls, perpendicular to a reference plane in which lies the support structure.

4. Artificial tooth with which to make a dental prosthesis; the dental prosthesis comprising a support structure (**15**) on which to mount said tooth (**1-14**); the tooth (1-**14**) being **characterized in that** it has, at its base along a longitudinal axis, a machining defining a cavity or a protrusion adapted to be coupled to a complementary recess or protrusion of the support structure (**15**) according to an interlocking male Female; wherein said protrusion or cavity is shaped as a cross.

5. Artificial tooth according to **claim 4,** wherein said cavity defining walls oriented along said longitudinal axis of the tooth.

6. A device for forming dental prostheses, comprising:
- a support structure according to **any one of claims 1 to 3;**
- a plurality of artificial teeth, each according to **one of claims 4 to 5** in which each artificial tooth is fixed to a corresponding cross of the support structure so rigid and interlocking removable.

7. Device according to **claim 6,** in which, for each artificial tooth, the respective longitudinal walls of the tooth cavity are in contact with corresponding vertical walls of the respective cross of the support structure.

8. Method for manufacturing a dental prosthesis, **characterized in that** it comprises the following stages:
- receive a representative image of the patient's mouth;
- produce a cast of the patient's gingiva on the basis of that impression;
- providing a plurality of artificial teeth (**1-14**) according to **one of claims 4 to 5;**
- prepare a support structure (**15**) according to **one of claims 1 to 3;**
- assemble the teeth (**1-14**) on the support structure (**15**) to form a device which forms a preassembled arch (**16**);
- block with a liquid substance the various components and solidify to impregnate the device in a matrix.

9. Method according to **claim 8,** wherein said steps are performed automatically in an industrial process.
